Europäisches Patentamt

European Patent Office

Office européen des brevets

(19)

(11) **EP 1 050 815 B1**

(12) **FASCICULE DE BREVET EUROPEEN**

(45) Date de publication et mention
de la délivrance du brevet:
**24.03.2004 Bulletin 2004/13**

(51) Int Cl.⁷: **G06F 11/16**, B61L 25/06

(21) Numéro de dépôt: **00401031.0**

(22) Date de dépôt: **13.04.2000**

(54) **Procédé et dispositif d'affichage sécurisé d'éléments graphiques sur un moyen de visualisation**

Verfahren und Vorrichtung zur sicheren Anzeige von Graphiken auf einem Sichtgerät

Method and apparatus for securely displaying graphics on a display

(84) Etats contractants désignés:
**AT BE CH CY DE DK ES FI FR GB GR IE IT LI LU MC NL PT SE**

(30) Priorité: **19.04.1999 FR 9904872**

(43) Date de publication de la demande:
**08.11.2000 Bulletin 2000/45**

(73) Titulaire: **ALCATEL**
**75008 Paris (FR)**

(72) Inventeur: **Guennec, Hervé**
**91700 Sainte-Geneviève des Bois (FR)**

(74) Mandataire: **Sciaux, Edmond et al**
**Compagnie Financière Alcatel**
**Département de Propriété Industrielle,**
**5, rue Noel Pons**
**92734 Nanterre Cedex (FR)**

(56) Documents cités:
**EP-A- 0 443 377      EP-A- 0 645 711**
**EP-A- 0 856 792      DE-A- 3 411 015**

**Description**

La présente invention concerne un procédé pour sécuriser l'affichage d'éléments graphiques sur un moyen de visualisation. L'invention s'applique particulièrement aux systèmes de supervision, notamment aux systèmes de supervision ferroviaire.

Les systèmes de supervision impliquent généralement l'affichage sur un écran d'éléments graphiques représentatifs de l'état des objets d'un système supervisé. Dans le cas de la supervision de réseau ferroviaire, ces éléments graphiques peuvent par exemple représenter l'état d'une aiguille ou d'un feu de signalisation. Classiquement, il y a des éléments graphiques distincts pour chacun des états d'un même objet représenté. Ainsi, il y aura un élément graphique représentant un feu de signalisation à l'état "vert", un élément graphique pour l'état "rouge", un pour l'état "orange clignotant", etc.

Cet affichage a pour finalité d'aider un opérateur humain à prendre des décisions en temps réel, certaines de ces décisions pouvant avoir des conséquences telles que des vies humaines peuvent être menacées. Aussi, il est nécessaire de s'assurer que l'affichage sur les écrans est exactement conforme à la réalité. Pour ce faire, donc, il est primordial de prendre en compte les éventuelles défaillances de la chaîne de traitement reliant l'unité de contrôle responsable de l'émission d'une commande d'affichage et l'écran sur lequel l'affichage a lieu.

Il convient donc de sécuriser l'affichage, c'est-à-dire de contrôler la conformité de l'affichage réel sur un écran par rapport aux commandes d'affichage.

Une première solution consiste à afficher deux fois chaque élément graphique. Ainsi, par redondance d'information, on minimise les possibilités d'erreurs. L'opérateur, voyant deux éléments graphiques affichés différents mais qui correspondent au même élément graphique demandé, est immédiatement averti qu'un problème est survenu dans le système de supervision et que l'information affichée n'est pas pertinente. Toutefois, une telle solution n'est pas satisfaisante dans la mesure où elle fait intervenir l'opérateur dans le processus de validation de l'information. De plus, la redondance d'information sur l'écran peut rendre la lecture de celui-ci peu claire.

Une seconde solution est divulguée dans l'article intitulée "*Verfahrensgesicherte Meldebildanzeige für den Fdl-Arbeitsplatz bei der Deutsche Bahn AG*", paru en 1994 dans la revue allemande *Signal und Draht*. Le principe présenté repose sur une redondance logicielle et matérielle. En effet, deux ordinateurs génèrent en parallèle une commande virtuelle d'affichage. Si la comparaison entre les deux résultats des deux commandes est correcte, alors la commande réelle est générée par l'un des deux ordinateurs.

Ce procédé présente deux inconvénients majeurs :

- D'une part, il ne permet pas de sécuriser l'affichage proprement dit (seule la génération de la commande d'affichage est sécurisée),
- D'autre part, il est coûteux puisque nécessitant deux ordinateurs.

Une troisième solution est présentée dans le brevet européen EP 0 443 377 intitulé "Dispositif d'affichage infaillible de diagramme". Deux commandes d'affichage sont générées pour chaque élément graphique à afficher. La première commande écrit dans la zone de la mémoire dite visible (c'est-à-dire associée au moyen de visualisation), tandis que la seconde commande écrit dans la zone de la mémoire dite invisible (c'est-à-dire non-associée au moyen de visualisation). Seule la partie invisible est relue. Si son contenu correspond effectivement au résultat attendu de la commande d'affichage, alors on fait l'hypothèse que le contenu de la partie visible est correct.

Cette solution présente aussi l'inconvénient de ne fiabiliser que la génération des commandes d'affichage et non l'affichage proprement dit. En effet, si une erreur ne touche qu'une partie de la mémoire (ce qui est le cas le plus courant) autre que la partie relue, elle ne sera pas détectée.

Une quatrième solution est présentée dans la demande de brevet allemand DE 3411015. Cette fois-ci, les données relues dans la mémoire vidéo sont codées puis comparées avec un code de référence.

Cette solution est insuffisante elle aussi, car elle ajoute un nouveau mécanisme (le moyen de codage) sans le sécuriser. Aussi, si une erreur intervient à la fois sur les données relues et sur le moyen de codage (ou bien sur le code de référence), alors il n'y aura pas détection.

De surcroît elle nécessite un mécanisme de contrôle périodique. Or, il est connu que la majorité des erreurs sont des erreurs ponctuelles. Si T est la période du contrôle périodique, la probabilité de détecter une telle erreur ponctuelle est donc de 1/T, ce qui est très insuffisant dans un système où un fort taux de sécurisation est demandé.

Le but de la présente invention est de contrôler la conformité de l'affichage des éléments graphiques sur un écran par rapport aux commandes d'affichage émises, sans nécessiter l'intervention d'un opérateur humain dans le processus de validation, ni faire d'hypothèses sur le taux de fiabilité des différents composants matériels et logiciels.

De surcroît, l'invention permet aussi de garantir la détection des doubles erreurs.

Pour ce faire, l'invention a pour objet un pour contrôler la conformité de l'affichage d'un élément graphique sur un moyen de visualisation, par rapport à une commande d'affichage, le moyen de visualisation étant piloté par un contrôleur d'affichage comportant un moyen d'interprétation, une mémoire locale, une mémoire vidéo, un moyen de comparaison et un moyen de codage, ledit procédé comportant les étapes ordonnées suivantes :

- Réception de la commande d'affichage par le moyen d'interprétation,
- Écriture d'un élément graphique à afficher déterminé par cette commande d'affichage, dans un emplacement de la mémoire locale également déterminé par la commande d'affichage,
- Copie de l'élément graphique à afficher dans la mémoire vidéo et affichage sur le moyen de visualisation.

Le procédé de l'invention se caractérise en ce qu'il comporte de surcroît les étapes ultérieures et ordonnées suivantes :

- comparaison par le moyen de comparaison entre d'une part, le contenu de la mémoire vidéo à l'adresse correspondant audit emplacement, et d'autre part un élément graphique de consigne contenu dans la mémoire locale et déterminé par la commande d'affichage,
- émission vers l'unité de contrôle du résultat de la comparaison et d'un élément graphique complémentaire contenu dans la mémoire locale et déterminé par la commande d'affichage, le résultat et l'élément graphique complémentaire étant codés par le moyen de codage,
- détermination par l'unité de contrôle d'un diagnostic en fonction du résultat codé, de l'élément graphique complémentaire codé, et d'au moins une voleur témoin déterminée par l'unité de contrôle en fonction de la commande d'affichage.

Le procédé selon l'invention peut en outre comporter l'une ou plusieurs des caractéristiques suivantes :

L'élément graphique de consigne et l'élément graphique complémentaire sont déterminés par le moyen d'interprétation à la réception de la commande d'affichage, et écrit dans la mémoire locale à l'issue de cette détermination.

L'ensemble des éléments de consigne possibles et l'ensemble des éléments graphiques complémentaires possibles sont préalablement stockés dans la mémoire locale.

L'élément graphique complémentaire est l'élément graphique qui ne diffère de l'élément graphique de consigne que par l'information graphique la plus critique.

L'unité de contrôle met en oeuvre les étapes suivantes, à la réception dudit résultat codé et de l'élément graphique complémentaire codé :

- comparaison entre le résultat codé et l'élément graphique complémentaire codé,
- comparaison entre le résultat codé et une valeur témoin déterminée par l'unité de contrôle en fonction de la commande d'affichage.

L'invention a également pour objet un contrôleur d'affichage permettant la mise en oeuvre du procédé décrit, c'est-à-dire un contrôleur d'affichage permettant le contrôle de la conformité de l'affichage d'un élément graphique sur un moyen de visualisation par rapport à une commande d'affichage émise par une unité de contrôle, ce contrôleur d'affichage comportant :

- Un moyen d'interprétation possédant des moyens pour recevoir la commande d'affichage et pour écrire un élément graphique à afficher déterminé par la commande d'affichage dans une mémoire locale,
- Un moyen pour copier l'élément graphique à afficher, stocké dans la mémoire locale, dans une mémoire vidéo afin d'être affiché sur le moyen de visualisation,

   le contrôleur d'affichage se caractérisant en ce qu'il comporte en outre :

- Un moyen de comparaison pour comparer l'élément graphique à afficher, stocké dans la mémoire locale, avec un élément graphique de consigne, également stocké dans la mémoire locale,
- Un moyen de codage pour coder d'une part le résultat issu du moyen de comparaison, et d'autre part un élément graphique complémentaire contenu dans la mémoire locale,
- Un moyen pour transmettre les résultats du moyen de codage à ladite unité de contrôle, ainsi à même de contrôler la conformité de l'affichage de l'élément graphique.

La présente invention ainsi que ses avantages seront davantage compris à la lecture de la description qui va en être faite en référence aux figures annexées.

La figure 1 illustre un mode de réalisation de l'invention.

Les figures 2a et 2b illustrent deux éléments graphiques.

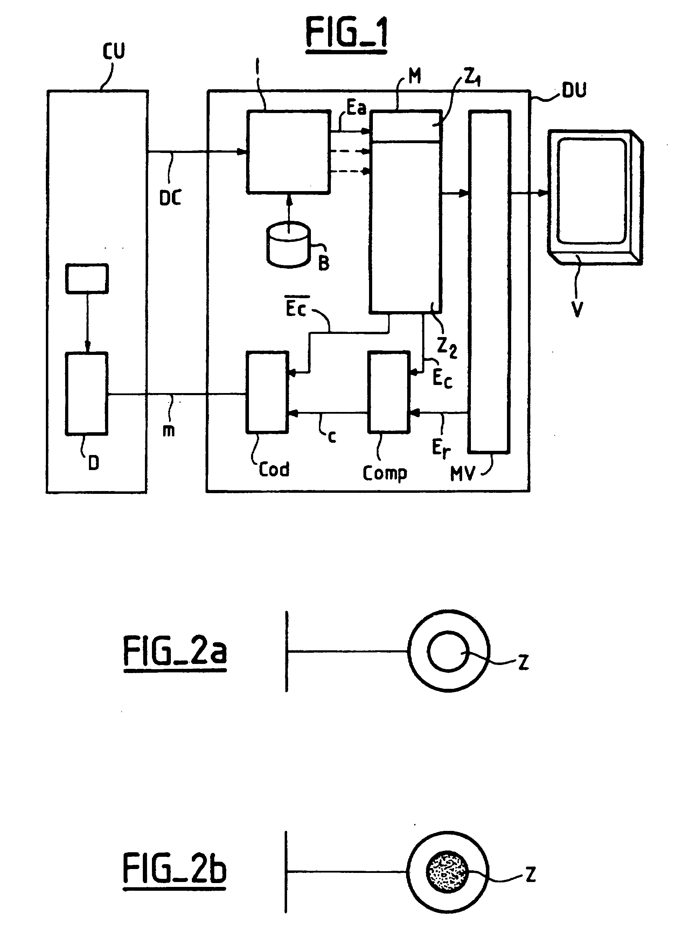

Sur la figure 1, l'unité de contrôle CU émet une commande d'affichage DC à destination du contrôleur d'affichage DU. Cette commande d'affichage est réceptionnée au sein du contrôleur d'affichage par un moyen d'interprétation I.

Cette commande d'affichage DC peut, entre autres, avoir pour paramètre le type de l'objet à afficher, un éventuel sous-type et l'état de cet objet. Le moyen d'interprétation I détermine alors l'élément à afficher $E_a$ à partir des paramètres contenus dans la commande d'affichage, et d'une base de données B contenant des paramètres permettant la génération des graphismes propres à chaque type et sous-type d'objets, ainsi que les particularismes liés à l'état.

Le type de l'objet fait référence à des grandes classes comme, dans le cas de systèmes de supervision de réseaux ferroviaires, des aiguilles, des feux de signalisation etc. Le sous-type est par exemple une espèce particulière d'aiguille ou de feu de signalisation. Comme il a été dit précédemment, à un même objet (même type et même sous-type), correspondent différents éléments graphiques en fonction des différents états que cet objet peut prendre.

La figure 2 représente un exemple de tels éléments graphiques. Les figures 2a et 2b représentent un même objet (même type et même sous-type) mais avec deux états différents. Le feu de signalisation de la figure 2a est, par exemple, rouge : la zone référencée z est hachurée. Le feu de signalisation de la figure 2b est par exemple vert et la zone référencée z n'est pas hachurée.

L'élément graphique $E_a$, ainsi déterminé, est alors écrit dans une mémoire locale M. De façon automatique et extérieure au cadre de l'invention, le contenu de cette mémoire est recopié dans la mémoire vidéo MV et affiché sur le moyen de visualisation V. Typiquement, cette étape automatique est réalisée par un logiciel particulier, généralement appelé driver, et qui est propre à l'architecture du contrôleur d'affichage et au moyen de visualisation V.

La mise en oeuvre la plus simple consiste à coder le graphisme de l'élément graphique dans un format graphique susceptible d'être écrit dans la mémoire vidéo MV. Il peut par exemple s'agir d'un codage de type *bitmap* dans lequel chaque unité élémentaire de codage (par exemple 1 octet pour une image en 256 couleurs) correspond à un pixel, c'est-à-dire à un point de l'image.

Il est bien entendu possible d'étendre l'invention à d'autres types de formats, la contrainte étant alors que ce format soit compris par le logiciel *driver* ou converti dans le format approprié pour pouvoir être écrit dans la mémoire vidéo.

La commande d'affichage DC peut aussi contenir un identifiant de localisation qui détermine l'emplacement d'une zone $Z_1$ de la mémoire locale M dans laquelle l'élément graphique $E_a$ doit être écrit. Il est entendu que chaque emplacement de cette zone $Z_1$ de la mémoire locale M correspond à un emplacement différent dans la mémoire vidéo MV et, par suite, à un emplacement différent sur le moyen de visualisation V.

À la suite de cette écriture de l'élément graphique $E_a$ dans la mémoire locale M, le moyen d'interprétation peut émettre une commande de contrôle CC à destination d'un moyen de comparaison Comp.

À la réception de cette commande de contrôle CC, le moyen de comparaison Comp lit le contenu de la mémoire vidéo MV à l'adresse correspondant à l'emplacement déterminé par la commande d'affichage DC. Dans le cas où aucune erreur n'est survenue, l'élément graphique $E_r$ qui est relu est le même que l'élément graphique $E_a$ qui a été écrit dans la mémoire locale M par le moyen d'interprétation I.

Il lit en outre un élément dit de consigne $E_c$ contenu dans la mémoire locale M, dans une zone $Z_2$ différente de celle où sont écrits les éléments graphiques $E_a$ par le moyen d'interprétation I (zone $Z_1$). Cet élément de consigne $E_c$ est déterminé par la commande d'affichage DC. Dans le cas où aucune erreur n'est survenue, l'élément graphique de consigne $E_c$ est identique à l'élément graphique $E_a$ qui a été écrit dans la mémoire locale M par le moyen d'interprétation I.

Le moyen de comparaison Comp effectue une comparaison bit à bit des deux éléments graphiques $E_r$ et $E_c$. Il peut par exemple s'agir d'un "et" logique bit à bit. Le résultat issu de ce comparateur est donc un élément graphique c, qui, dans le cas où aucune erreur n'est survenue, est identique à l'élément graphique $E_r$.

Il est à noter que le temps au bout duquel l'élément graphique $E_r$ est lisible dans la mémoire vidéo MV est indéterminé. En effet, ce temps dépend d'une part du logiciel driver et d'autre part des quanta de temps durant lesquels la mémoire vidéo est accessible en lecture, du fait d'éventuels accès concurrents.

Par conséquent, le comparateur Comp peut mettre en oeuvre une temporisation, paramétrée par un paramètre de *time-out*, à la suite de laquelle l'élément graphique $E_r$ est lu. Autrement dit, cette temporisation permet la synchronisation entre les accès à la mémoire vidéo et le processus de contrôle.

L'élément graphique c résultant de la comparaison, est ensuite envoyé à un codeur Cod dont le but est d'effectuer un codage de contrôle d'erreur par une fonction f. Ce codage f est préférentiellement un codage cyclique par redondance de type CRC (*Cyclic Redudancy Code* ou *Cyclic Redundancy Check*, en anglais).

La même fonction f est utilisée pour coder un élément graphique dit complémentaire $\overline{E_C}$. Cet élément graphique complémentaire est lu dans la mémoire locale M, dans la même zone $Z_2$ que celle où a déjà été lu l'élément graphique de consigne $E_c$. De la même façon que l'élément graphique de consigne $E_{c,}$, il est déterminé par la commande d'affichage DC.

Selon une première mise en oeuvre, la zone $Z_2$ de la mémoire locale M, contient l'ensemble des différents éléments graphiques possibles. La détermination des éléments graphiques de consigne $E_c$ ou complémentaire $\overline{E_C}$ se fait parmi cet ensemble par les paramètres de la commande d'affichage DC (type, sous-type, état...).

Selon une seconde mise en oeuvre possible, le moyen d'interprétation I détermine l'élément graphique complémentaire en même temps qu'il détermine l'élément graphique à afficher $E_a$, et écrit ces deux éléments dans la zone $Z_2$ de la mémoire locale M. De même que pour l'élément graphique $E_a$, l'élément graphique complémentaire $\overline{E_C}$ est déterminé grâce à la base de donnée B. Il est à noter, pour plus de clarté, que l'élément graphique à afficher sera écrit deux fois : une fois dans la zone $Z_r$ $(E_a)$ et une fois dans la zone $Z_2$ $(E_c)$. Ces deux écritures supplémentaires sont symbolisées sur la figure 1 par les flèches en pointillés.

Dans cette seconde mise en oeuvre, la zone $Z_2$ de la mémoire locale, ne contient à tout moment que deux éléments graphiques $(E_c$ et $\overline{E_C})$ et peut donc être de taille bien plus réduite que dans le cas de la première mise en oeuvre.

L'élément graphique complémentaire est un élément graphique différent de celui devant être affiché. De façon préférentielle, c'est un élément graphique qui ne diffère de ce dernier que par l'information graphique la plus critique, c'est-à-dire typiquement celle qui correspond à l'état de l'objet correspondant.

En prenant l'exemple de la figure 2, l'élément graphique représenté par la figure 2b est le complémentaire de celui représenté par la figure 2a. En effet, seule la couleur de la zone z diffère, et c'est l'information la plus sensible puisque c'est celle qui véhicule le plus d'information sémantique.

Il est à noter que pour chaque élément graphique donné, l'élément graphique complémentaire est déterminé de façon univoque lors de la création du système. Ces correspondances sont stockées dans la zone $Z_2$ de la mémoire locale M (mise en oeuvre numéro 1), ou dans la base de donnée B (mise en oeuvre numéro 2).

Un moyen de diagnostic D localisé sur l'unité centrale CU reçoit donc l'élément graphique c issu du comparateur et codé par la fonction de codage f, ainsi que l'élément graphique complémentaire $\overline{E_c}$, lui aussi codé par cette fonction de codage f. Typiquement, ces deux informations sont émises par l'intermédiaire d'un unique message m.

L'unité de diagnostic D est à même de comparer $f(c)$ et $f(\overline{E_C})$, ainsi que $f(c)$ et une valeur témoin $f_1$. Cette valeur témoin est issue d'une table T mettant en correspondance ces valeurs témoins avec les paramètres déterminant l'élément graphique à afficher. Autrement dit, l'unité centrale CU est à même de déterminer pour chaque objet et chaque état, la valeur de $f(c)$ qu'elle doit attendre.

Dans le cas où $f(c)$ est différent de la valeur témoin $f_1$ correspondante, ou dans le cas où $f(\overline{E_C})$ est égal à $f(c)$, alors cela signifie qu'une erreur est subvenue dans le processus et que par conséquent l'information affichée sur le moyen de visualisation V n'est plus pertinente. Une alarme peut alors être mise en oeuvre.

Subsidiairement, une troisième comparaison peut être mise en oeuvre entre $f(\overline{E_C})$ et une seconde valeur témoin $f_2$ déterminée de la même façon que la première. Cette troisième comparaison permet de sécuriser le moyen de transmission qui lie l'unité de contrôle CU au contrôleur d'affichage DU.

Le tableau suivant indique les différents cas d'erreurs possibles dans le traitement d'une commande d'affichage DC selon le procédé de l'invention.

La première colonne indique la localisation de l'erreur. La seconde colonne indique les différentes conséquences que peut avoir une erreur ayant cette localisation : par exemple, une erreur sur la mémoire locale M peut se répercuter sur l'élément graphique à afficher $E_a$, et/ou sur l'élément graphique de consigne $E_c$: et/ou sur l'élément graphique complémentaire $\overline{E_c}$. Enfin, la troisième colonne indique comment l'erreur peut être détectée par le procédé selon l'invention.

| Localisation | Conséquences | Détection |
|---|---|---|
| I | Erreur sur $E_a$ | $f(c)$ erroné |
| M | Erreur sur $E_a$<br>Erreur sur $E_c$<br>Erreur sur $\overline{E_C}$ | $f(c)$ erroné<br>$f(c)$ erroné<br>$f(\overline{E_C})$ erroné |
| MV | Erreur sur $E_a$ | $f(c)$ erroné |
| Comp | Erreur sur c | $f(c)$ erroné |
| Cod | Erreur sur $f(c)$<br>Erreur sur $f(\overline{E_C})$ | $f(c)$ erroné<br>$f(\overline{E_C})$ erroné |
| Transmission | Erreur sur $E_a$<br>Erreur sur le message contenant $f(c)$ et $f(\overline{E_C})$ | $f(c)$ erroné<br>$f(c)$ et/ou $f(\overline{E_C})$ erroné |

Le procédé selon l'invention permet aussi de détecter les doubles erreurs, c'est-à-dire les cas où deux erreurs surviennent simultanément. Le tableau suivant montre quelques-uns des ces cas :

| Localisation | Conséquences | Détection |
|---|---|---|
| I+M | Erreur sur le message contenant $f(c)$ et $f(\overline{E_c})$ | $f(c)$ erroné et/ou $f(\overline{E_c})$ erroné |
| M+MV | Erreur sur $E_c$ et/ou sur $E_c$ | $f(c)$ erroné et/ou $f(\overline{E_c})$ erroné |
| VM+T | Erreur sur le message contenant $f(c)$ et $f(\overline{E_c})$ | $f(c)$ et/ou $f(\overline{E_c})$ erroné |

**Revendications**

1.   Procédé pour contrôler la conformité de l'affichage d'un élément graphique sur un moyen de visualisation (V) par rapport à une commande d'affichage émise par une unité de contrôle (UC), ledit moyen de visualisation étant piloté par un contrôleur d'affichage (DU) comportant un moyen d'interprétation (I), une mémoire locale (M), une mémoire vidéo (MV), un moyen de comparaison (Comp) et un moyen de codage (Cod), ledit procédé comportant les étapes ordonnées suivantes :

   •   réception de ladite commande d'affichage, par ledit moyen d'interprétation,
   •   écriture d'un élément graphique à afficher ($E_a$) déterminé par ladite commande d'affichage (DC), dans un emplacement de ladite mémoire locale (M) également déterminé par ladite commande d'affichage (DC),
   •   copie dudit élément graphique à afficher dans ladite mémoire vidéo (MV) et affichage sur ledit moyen de visualisation (V),

   ledit procédé **se caractérisant en ce qu'**il comporte de surcroît les étapes ultérieures et ordonnées suivantes :

   •   comparaison par ledit moyen de comparaison (Comp) entre d'une part, le contenu ($E_r$) de ladite mémoire vidéo (MV) à l'adresse correspondant audit emplacement, et d'autre part un élément graphique de consigne ($E_c$) contenu dans ladite mémoire locale (M) et déterminé par ladite commande d'affichage (DC),
   •   émission vers ladite unité de contrôle (CU) du résultat (c) de ladite comparaison et d'un élément graphique complémentaire ($\overline{E_c}$) contenu dans ladite mémoire locale (M) et déterminé par ladite commande d'affichage (DC), ledit résultat et ledit élément graphique complémentaire étant codés par ledit moyen de codage (Cod),
   •   détermination par ladite unité de contrôle de ladite conformité en fonction dudit résultat (c) codé, dudit élément graphique complémentaire ($\overline{E_c}$) codé, et d'au moins une valeur témoin déterminé par ladite unité de contrôle (CU) en fonction de ladite commande d'affichage (DC).

2.   Procédé selon la revendication 1, **caractérisé en ce que** ledit élément graphique de consigne ($E_c$) et ledit élément graphique complémentaire ($\overline{E_c}$) sont déterminés par ledit moyen d'interprétation à la réception de ladite commande d'affichage (DC), et écrit dans ladite mémoire locale (M) à l'issue de cette détermination.

3.   Procédé selon la revendication 1, **caractérisé en ce que** l'ensemble des éléments de consigne ($E_c$) possibles et l'ensemble des éléments graphiques complémentaires ($\overline{E_C}$) possibles sont préalablement stockés dans ladite mémoire locale (M).

4.   Procédé selon l'une des revendications précédentes, **caractérisé en ce que** ledit élément graphique complémentaire ($\overline{E_C}$) est l'élément graphique qui ne diffère de l'élément graphique de consigne ($E_c$) que par l'information graphique la plus critique.

5.   Procédé selon l'une quelconque des revendications précédentes, **caractérisé en ce que** ladite unité de contrôle (CU) met en oeuvre les étapes suivantes, à la réception dudit résultat (c) codé et dudit élément graphique complémentaire ($\overline{E_C}$) codé :

   •   comparaison entre ledit résultat (c) codé et ledit élément graphique complémentaire ($\overline{E_C}$) codé,
   •   comparaison entre ledit résultat (c) codé et une valeur témoin déterminée par ladite unité de contrôle en fonction de ladite commande d'affichage (DC).

**6.** Contrôleur d'affichage (DU) permettant le contrôle de la conformité de l'affichage d'un élément graphique sur un moyen de visualisation (V) par rapport à une commande d'affichage (DC) émise par une unité de contrôle (UC), ledit contrôleur d'affichage comportant :

- Un moyen d'interprétation (I) possédant des moyens pour recevoir ladite commande d'affichage (DC), et pour écrire un élément graphique à afficher ($E_a$) déterminé par ladite commande d'affichage dans une mémoire locale (M),
- Un moyen pour copier ledit élément graphique à afficher, stocké dans ladite mémoire locale, dans une mémoire vidéo (MV) afin d'être affiché sur ledit moyen de visualisation (V),

   ledit contrôleur d'affichage **se caractérisant en ce qu'**il comporte en outre :

- Un moyen de comparaison (Comp) pour comparer ledit élément graphique à afficher, stocké dans ladite mémoire locale, avec un élément graphique de consigne ($E_c$), également stocké dans ladite mémoire locale,
- Un moyen de codage pour coder d'une part le résultat (c) issu dudit moyen de comparaison, et d'autre part un élément graphique complémentaire ($\overline{E_C}$) contenu dans ladite mémoire locale,
- Un moyen pour transmettre les résultats dudit moyen de codage à ladite unité de contrôle, ainsi à même de contrôler la conformité de l'affichage dudit élément graphique.

**Claims**

**1.** A method of checking compliance between the display of a graphics element on display means (V) relative to a display command issued by a command unit (UC), said display means being driven by a display controller (DU) comprising interpreter means (I), a local memory (M), a video memory (MV), comparator means (Comp), and coder means (Cod), said method comprising the following ordered steps:

- said interpreter means receiving said display command;
- writing a graphics element for display ($E_a$) determined by said display command (DC) in a position of said local memory (M) likewise determined by said display command (DC); and
- copying the graphics element for display into the video memory (MV) and displaying it on the display means (V);

   said method being **characterized in that** it further comprises the following subsequent ordered steps:

- said comparator means (Comp) comparing the content ($E_r$) of said video memory (MV) at the address corresponding to said position with a reference graphics element ($E_c$) contained in said local memory (M) and determined by said display command (DC);
- sending to said command unit (CU) the result (c) of said comparison together with a complementary graphics element ($\bar{E}_c$) contained in said local memory (M) and determined by said display command (DC), said result and said complementary graphics element being encoded by said coder means (Cod); and
- said command unit checking said compliance as a function of said encoded result (c), of said encoded complementary graphics element ($\bar{E}_c$), and of at least one specimen value determined by said command unit (CU) as a function of said display command (DC).

**2.** A method according to claim 1, **characterized in that** said reference graphics element ($E_c$) and said complementary graphics element ($\bar{E}_c$) are determined by said interpreter means on receiving said display command (DC), and they are written into said local memory (M) after making said determination.

**3.** A method according to claim 1, **characterized in that** all possible reference elements ($E_c$) and all possible complementary graphics elements ($\bar{E}_c$) are previously stored in said local memory (M).

**4.** A method according to any preceding claim, **characterized in that** said complementary graphics element ($\bar{E}_c$) is the graphics element which differs from the reference graphics element ($E_c$) in the most critical graphics information, only.

**5.** A method according to any preceding claim, **characterized in that** said command unit (CU) implements the following steps on receiving said encoded result (c) and said encoded complementary graphics element ($\bar{E}_c$):

- comparing said encoded result (c) with said encoded complementary graphics element ($\bar{E}_c$); and
- comparing said encoded result (c) with a specimen value determined by said command unit as a function of said display command (DC).

**6.** A display controller (DU) for checking compliance between the display of a graphics element on display means (V) and a display command (DC) issued by a command unit (UC), said display controller comprising:

- interpreter means (I) possessing means for receiving said display command (DC) and for writing a graphics element for display ($E_a$) as determined by said display command in a local memory (M); and
- means for copying said graphics element for display and stored in said local memory into a video memory (MV) in order to be displayed on said display means (V);

said display controller being **characterized in that** it further comprises:

- comparator means (Comp) for comparing said graphics for display as stored in said local memory with a reference graphics element ($E_c$), likewise stored in said local memory;
- coder means for encoding the result (c) from said comparator means, and a complementary graphics element ($\bar{E}_c$) contained in said local memory; and
- means for transmitting the results of said coder means to said command unit thus enabling it to check compliance of the display of said graphics element.

**Patentansprüche**

**1.** Verfahren zur Überprüfung der Übereinstimmung der Anzeige eines Graphikelements auf einem Sichtgerät (V) im Vergleich zu einem von einer Steuereinheit (*UC*) gesendeten Anzeigebefehl, wobei das Sichtgerät von einem Anzeigecontroller (DU) gesteuert wir, der eine Interpretationsvorrichtung (I), einen lokalen Speicher (M), einen Bildspeicher (MV), eine Vergleichsvorrichtung (Comp) und eine Codiervorrichtung (Cod) aufweist, und wobei dieses Verfahren die folgenden geordneten Schritte aufweist:

- Empfang des Anzeigebefehls durch die Interpretationsvorrichtung;
- Schreiben eines durch diesen Anzeigebefehl (DC) bestimmten anzuzeigenden Graphikelements ($E_a$) an einen Ort des lokalen Speichers (M), der ebenfalls durch den Anzeigebefehl (DC) bestimmt ist;
- Kopie des anzuzeigenden Graphikelements in den Bildspeicher (MV) und Anzeige auf dem Sichtgerät (V);

hierbei ist das Verfahren **dadurch gekennzeichnet, dass** es überdies die folgenden späteren und geordneten Schritte aufweist:

- Vergleich durch die Vergleichsvorrichtung (Comp) zwischen einerseits dem Inhalt ($E_r$) des Bildspeichers (MV) an der dem genannten Ort entsprechenden Adresse und andererseits eines im lokalen Speicher (M) enthaltenen und durch den Anzeigebefehl (DC) bestimmten Soll-Graphikelements ($E_c$);
- Senden des Ergebnisses (c) des Vergleichs und eines im lokalen Speicher (M) enthaltenen und durch den Anzeigebefehl (DC) bestimmten komplementären Graphikelements ($\bar{E}_c$) an die Steuereinheit (CU), wobei das Ergebnis und das komplementäre Graphikelement von der Codiervorrichtung (Cod) codiert werden;
- Feststellung der Übereinstimmung durch die Steuereinheit in Abhängigkeit vom codierten Ergebnis (c) zwischen dem codierten komplementären Graphikelement ($\bar{E}_c$) und mindestens einem Bezugswert, der von der Steuereinheit (CU) in Abhängigkeit vom Anzeigebefehl (DC) bestimmt wird.

**2.** Verfahren nach Anspruch 1, **dadurch gekennzeichnet, dass** das Soll-Graphikelement ($E_c$) und das komplementäre Graphikelement ($\bar{E}_c$) von der Interpretationsvorrichtung beim Empfang des Anzeigebefehls bestimmt und nach Abschluss dieser Bestimmung in den lokalen Speicher geschrieben werden.

**3.** Verfahren nach Anspruch 1, **dadurch gekennzeichnet, dass** die Menge der möglichen Sollelemente ($E_c$) und die Menge der möglichen komplementären Graphikelemente ($\bar{E}_c$) zuvor im lokalen Speicher (M) abgelegt werden.

**4.** Verfahren nach einem der vorhergehenden Ansprüche, **dadurch gekennzeichnet, dass** das komplementäre Graphikelement ($\bar{E}_c$) das Graphikelement ist, das vom Soll-Graphikelement ($E_c$) nur durch die kritischste graphische Information abweicht.

**5.** Verfahren nach einem beliebigen der vorhergehenden Ansprüche, **dadurch gekennzeichnet, dass** die Steuereinheit (CU) beim Empfang des codierten Ergebnisses (c) und des codierten komplementären Graphikelements ($\overline{E_c}$) die folgenden Schritte ausführt:

- Vergleich zwischen dem codierten Ergebnis (c) und dem codierten komplementären Graphikelement ($\overline{E_c}$);
- Vergleich zwischen dem codierten Ergebnis (c) und einem Bezugswert, der von der Steuereinheit in Abhängigkeit vom Anzeigebefehl (DC) bestimmt wird.

**6.** Anzeigecontroller (DU), der die Überprüfung der Übereinstimmung der Anzeige einer Graphik auf einem Sichtgerät (V) im Vergleich zu einem Anzeigebefehl (DC) ermöglicht, *der von einer Steuereinheit (UC) gesendet wurde,* wobei dieser Anzeigecontroller folgendes aufweist:

- Eine Interpretationsvorrichtung (I), die über Vorrichtungen zum Empfangen des Anzeigebefehls (DC) und zum Schreiben eines anzuzeigenden Graphikelements ($E_a$) verfügt, das durch den Anzeigebefehl in einem lokalen Speicher (M) bestimmt ist;
- Eine Vorrichtung zum Kopieren des anzuzeigenden Graphikelements, das im lokalen Speicher abgelegt ist, in einen Bildspeicher (MV), um auf dem Sichtgerät (V) angezeigt zu werden;

  wobei der Anzeigecontroller **dadurch gekennzeichnet ist, dass** er außerdem folgendes aufweist:

- Eine Vergleichsvorrichtung (Comp), um das anzuzeigende Graphikelement, das im lokalen Speicher abgelegt ist, mit einem Soll-Graphikelement ($E_c$) zu vergleichen, das ebenfalls im lokalen Speicher abgelegt ist;
- Eine Codiervorrichtung, um einerseits das aus der Vergleichsvorrichtung hervorgegangene Ergebnis (c) und andererseits ein komplementäres Graphikelement ($\overline{E_c}$), das im lokalen Speicher enthalten ist, zu codieren;
- Eine Vorrichtung, um die Ergebnisse der Codiervorrichtung an die genannte Steuereinheit zu übertragen, die auf diese Weise in der Lage ist, die Übereinstimmung der Anzeige des Graphikelements zu überprüfen.

# FIG_1

# FIG_2a

# FIG_2b